# EUROPÄISCHE PATENTSCHRIFT

(11) **EP 2 686 928 B1**
(45) Veröffentlichungstag und Bekanntmachung des Hinweises auf die Patenterteilung: **11.05.2016**
(21) Anmeldenummer: 12713625.7
(22) Anmeldetag: 15.03.2012
(51) Int. Cl.: H02H 3/02, H02H 3/08

(54) **ELEKTRISCHE VORRICHTUNG FÜR DEN KURZSCHLUSSSCHUTZ EINER DREHSTROMLAST IN EINEM DREHSTROMSYSTEM**
ELECTRICAL APPARATUS FOR THE SHORT-CIRCUIT PROTECTION OF A THREE-PHASE LOAD IN A THREE-PHASE SYSTEM
DISPOSITIF ÉLECTRIQUE POUR LA PROTECTION CONTRE LES COURTS-CIRCUITS D'UNE CHARGE DE COURANT TRIPHASÉ DANS UN SYSTÈME TRIPHASÉ

(30) Priorität: 16.03.2011 DE 102011001340
(43) Veröffentlichungstag der Anmeldung: 22.01.2014
(73) Patentinhaber: Phoenix Contact GmbH & Co. KG, 32825 Blomberg (DE)
(72) Erfinder: SCHAPER, Elmar, 32676 Lügde (DE); DURTH, Rainer, 32805 Horn-Bad Meinberg (DE); HEUER, Lutz, 32825 Blomberg (DE); SCHULZ, Bernd, 32839 Steinheim (DE)
(74) Vertreter: Michalski, Stefan
(86) Internationale Anmeldenummer: PCT/EP2012/054553
(87) Internationale Veröffentlichungsnummer: WO 2012/123541

(56) Entgegenhaltungen:
- DE-A1- 2 111 154
- DE-A1- 2 947 700
- DE-A1- 4 040 359
- DE-C- 473 336
- DE-C- 824 812

## Beschreibung

Die Erfindung betrifft eine Vorrichtung für den Kurzschlussschutz einer Drehstromlast in einem Drehstromsystem, eine Halbleiterschaltgeräteschutzvorrichtung mit der vorgenannten Vorrichtung sowie ein Verfahren zur Verbesserung des Kurzschlussschutzes einer Drehstromlast in einem Drehstromsystem.

In Drehstromsystemen, auch Dreiphasenwechselstromsysteme oder Netzanwendungen genannt, ist ein Kurzschlussschutz für eine an dem Drehstromsystem betriebene Drehstromlast, wie beispielsweise ein Motor, ein Heizelement oder eine Lampe, welche vielfach über ein Schaltgerät, wie einen Frequenzumrichter, ein Schütz oder ein Halbleitermotorschaltgerät mit dem Drehstromnetz verbunden ist, aus Gründen der elektrischen Sicherheit erforderlich. Beispielsweise sind strombegrenzende Schaltelemente, wie Sicherungen oder Leistungsschutzschalter, für den Kurzschlussschutz verwendbar.

Wichtige Parameter zur Dimensionierung derartiger Schaltelemente sind zum einen der Durchlassstrom, also der Spitzenwert des Stromes, der vor der Abschaltung der Drehstromlast fließt, sowie die erforderliche Auslöseenergie für das Schaltelement, beispielsweise das Schmelzintegral einer Sicherung, also die Energie, die notwendig ist, die Abschaltung mittels des Schaltelements herbeizuführen. Die lastspezifische Dimensionierung beider vorgenannter Kenngrößen ist abhängig von den Anschlusswerten des Drehstromnetzes, dem Schaltelement, der angeschlossenen Impedanz, welche aufgrund vorhandener Netz- und/oder Leitungsimpedanzen trotz Kurzschluss wirksam ist, sowie abhängig von weiteren Elementen, die den Kurzschlussstrom führen müssen.

Bei strombegrenzenden Schaltelementen tritt vielfach das Problem auf, dass die zulässigen Parameter eines nachgeschalteten Schaltgerätes, wie eines Schützes oder eines Motorschaltgerätes, überschritten werden könnten und daher kleinere Sicherungen ausgewählt werden müssen. Dies führt jedoch in Anwendungen mit prinzipbedingt hohen Spitzenströmen, wie beispielsweise bei Anlaufströmen von Motoren, zu einem Designkonflikt. Darüber hinaus können viele aus dem Stand der Technik bekannte strombegrenzende Schaltelemente zwar schnell hohe Kurzschlussströme abschalten, wirken jedoch bei verhältnismäßig kleinen Kurzschlussströmen zu langsam, so dass durch die nachgelagerten Lasten gegebenenfalls zu große Ströme fließen können, die in den angeschlossenen Motoren oder Heizelementen Schäden verursachen können.

Die aus dem Stand der Technik bekannten Lösungsansätze für vorgenannte Probleme sehen dazu vor, eine möglichst optimale Abstimmung zwischen dem strombegrenzenden Schaltelement, dem Drehstromnetz und der Last zu erreichen. In diesem Zusammenhang wird gemäß der Norm IEC 60947-4-1 im Rahmen des Kurzschlussschutzes zwischen zwei Zuordnungsarten unterschieden, die den zulässigen Schädigungsgrad eines Gerätes bzw. einer Last nach einem Kurzschluss beschreiben. In der Zuordnungsart 1 dürfen nachgelagerte Geräte, wie zum Beispiel Schütze oder Halbleiterschaltgeräte, zerstört werden, wenn von ihnen keine Gefahr wie Feuer oder durch offene spannungsführende Teile ausgeht. In der Zuordnungsart 2 müssen die nachgelagerten Geräte jedoch funktionsfähig bleiben, wobei ein Benutzereingriff, wie das Aufbrechen von Schaltkontakten mit einfachen Werkzeugen, notwendig sein kann. Dabei ist eine Einschränkung der Lebensdauer des nachgelagerten Gerätes bzw. der Last zulässig, was bedeutet, dass der Kurzschlussfall nicht beliebig oft auftreten darf. Während mechanische Schaltgeräte, wie Schütze, häufig der Zuordnungsart 2 zugeordnet sind, ist für Halbleiterschaltgeräte, beispielsweise für Motoren, meist die Zuordnungsart 1 zutreffend.

Die aus dem Stand der Technik bekannten Lösungsansätze für vorgenannte Probleme sehen weiterhin vor, entweder den Kurzschlussstrom so schnell wie möglich abzuschalten, so dass es zu keiner Schädigung in dem nachgelagerten Gerät bzw. der Last kommt, oder den schädlichen Kurzschlussstrom, beispielsweise mit Vorwiderständen, soweit zu begrenzen, dass kritische Parameter des nachgeschalteten Gerätes bzw. der Last nicht überschritten werden oder alternativ das Schaltgerät entsprechend überdimensioniert auszuführen. Alle diese Ansätze haben jedoch den Nachteil, dass sie entsprechend des nachgeschalteten Gerätes bzw. der Last sehr spezifisch ausgeführt werden müssen und daher nicht universell verwendbar sind.

Auch ist aus der DE 29 47 700 A1 eine Anordnung zum Schutz einer Leitung und/oder eines Verbrauchers gegen Zerstörungen infolge eines Kurzschlusses mit einem Leistungsschalter und einer Überwachungseinrichtung, die beim Auftreten eines Kurzschlusses ein Auslösesignal abgibt, bekannt. Am Anfang der Leitung ist ein elektronischer Kurzschließer angeordnet, der von dem Auslösesignal gesteuert wird und zur sofortigen Übernahme des Kurzschlussstromes bis zu dessen Abschaltung durch den gleichzeitig angesteuerten Leistungsschalter ausgebildet ist.

Weiterhin ist aus der DE 40 40 359 A1 eine Einrichtung zum Freischalten eines Abzweiges in elektrischen Niederspannungsverteilungen bekannt. Die Einrichtung enthält einen mit dem Verbraucher in Reihe geschalteten Leitungsschutzschalter und einen Überbrückungsstromzweig. Der Überbrückungsstromzweig ist zwischen einem Phasenleiter und einem Rückleiter angeordnet. Der Überbrückungsstromzweig enthält einen Überbrückungsschalter, dem ein Entlastungsschalter parallelgeschaltet ist, der mit einem Magnetantrieb gekoppelt ist. Ein Gerät im Laststromkreis wird im Kurzschlussfall durch den Überbrückungsstromzweig geschützt.

Der Erfindung liegt daher die Aufgabe zugrunde, eine Vorrichtung bereitzustellen, mit der die Einordnung von Geräten bzw. Lasten der Zuordnungsart 1 in die Zuordnungsart 2 ermöglicht wird, ohne das es dabei zu technischen Einschränkungen des Kurzschlussschutzes für das Gerät bzw. die Last kommt. Insbesondere ist es die Aufgabe der Erfindung, eine Vorrichtung bereitzustellen, die unabhängig von der Art des zu schützenden Geräts bzw. der Last einen Kurzschlussschutz für das Gerät bzw. die Last bereitstellt, ohne das im Kurzschlussfall das Gerät bzw. die Last zerstört wird.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Demnach wird die Aufgabe gelöst durch eine Vorrichtung für den Kurzschlussschutz einer Drehstromlast in einem Drehstromsystem, umfassend einen Eingang zum Anschließen der Vorrichtung an ein Drehstromnetz, einen Ausgang zum Anschließen der Drehstromlast an die Vorrichtung, ein Mittel zum Herstellen eines Hilfskurzschlusses in dem Drehstromnetz durch Zündung des Mittels, ein Mittel zum Erkennen eines Kurzschlusses an der Drehstromlast, und ein Mittel zum Erzeugen eines Zündimpulses bei Erkennen des Kurzschlusses, wobei das Mittel zum Herstellen des Hilfskurzschlusses und das Mittel zum Erkennen des Kurzschlusses im Strompfad zwischen dem Eingang und dem Ausgang vorgesehen sind, das Mittel zum Herstellen des Hilfskurzschlusses durch den Zündimpuls zündbar ist, das Mittel zum Erkennen des Kurzschlusses einen Stromsensor und ein Mittel zum Erkennen einer Schaltschwelle aufweist, der Stromsensor im Strompfad einer Phase des Drehstromnetzes angeordnet ist, das Mittel zum Erkennen der Schaltschwelle mit dem Stromsensor zusammenwirkt, das Mittel zum Erkennen der Schaltschwelle derart ausgestaltet ist, dass bei Überschreiten einer vordefinierten Schaltschwelle das Erkennen eines Kurzschlusses an das Mittel zum Erzeugen des Zündimpulses signalisiert wird, und das Mittel zum Erkennen der Schaltschwelle eine galvanische Trenneinrichtung aufweist.

Erfindungsgemäß ist also vorgesehen, dass im Fall eines Kurz- und/oder Erdschlusses hinter der Vorrichtung, also beispielsweise bei einem Kurzschluss in der Drehstromlast, durch die Vorrichtung ein sogenannter Hilfskurzschluss als "Bypass" geschaffen wird, so dass ein für die Drehstromlast schädlicher Kurzschlussstrom nicht mehr durch die Drehstromlast oder durch ein der Drehstromlast vorgeschaltes Schaltgerät fließt, sondern aufgrund des geschaffenen Bypasses durch eine aus dem Stand der Technik bekannte Kurzschlussschutzeinrichtung, wie beispielsweise eine Sicherung oder ein Leistungsschutzschalter, der zwischen dem Drehstromnetz und der Vorrichtung vorgesehen sein kann, abgeschaltet wird. Dabei kann der Bypass bzw. der Hilfskurzschluss beispielsweise als Kurzschluss zwischen zwei Phasen des Drehstromnetzes verwirklicht werden, so dass dann die Kurzschlussschutzeinrichtung die Verbindung zwischen der Drehstromlast und dem Drehstromnetz unterbricht.

Damit ermöglicht die erfindungsgemäße Vorrichtung auf besonders einfache Weise, dass auch Motorschaltgeräte auf Halbleiterbasis, für die bislang die Zuordnungsart 1 zutreffend war, durch Anschaltung über die Vorrichtung an das Drehstromnetz auch die Zuordnungsart 2 erreichen, also gegenüber dem aus dem Stand der Technik bekannten Lösungen nicht mehr im Kurzschlussfall zerstört werden. Dadurch, dass das Mittel zum Herstellen des Hilfskurzschlusses einen Bypass schafft, bleibt die an den Ausgang anschließbare Drehstromlast im Kurzschlussfall unversehrt, da der Kurzschlussstrom nicht mehr durch Drehstromlast sondern durch den Bypass fließt. Die Vorrichtung stellt also in besonders vorteilhafter Weise eine Schutzeinrichtung für eine Drehstromlast gegen Zerstörung durch ein Kurzschlussstrom dar, in dem das Mittel für die Erkennung des Kurzschlusses im Kurzschlussfall den Kurzschluss detektiert, dann bei Detektion des Kurzschlusses das Mittel zum Erzeugen des Zündimpulses durch den Zündimpuls das zündbare Mittel zum Herstellen des Hilfskurzschlusses derart zündet, dass ein Bypass, also ein Kurzschluss bzw. ein Hilfskurzschluss, eingangsseitig von der Vorrichtung in das Drehstromnetz eingespeist wird, so dass eine vorgeschaltete Kurzschlussschutzeinrichtung auslöst und die Energieversorgung der Vorrichtung, und damit auch der an die Vorrichtung angeschlossenen Drehstromlast, unterbricht.

Vorzugsweise ist der Stromsensor als Shuntwiderstand, als PTC, als Hallsensor oder als Rogowskispule ausgeführt. In diesem Zusammenhang ist weiterhin vorgesehen, dass jede Phase des Drehstromnetzes einen jeweiligen Stromsensor und ein jeweiliges Mittel zum Erkennen einer Schaltschwelle aufweist und alle Mittel zum Erkennen der jeweiligen Schaltschwellen ausgangsseitig über eine Oder-Verknüpfung derart zusammengeschaltet sind, dass bei Überschreiten der Schaltschwelle an bereits einer Phase das Erkennen eines Kurzschlusses an das Mittel zum Erzeugen des Zündimpulses signalisiert wird. Vorzugsweise ist als Schaltschwelle ein Kurzschlussstromwert definiert, der beispielsweise das zehn- bis zwanzigfache des Nennstroms betragen kann. Bei Überschreiten dieses Kurzschlussstromwertes signalisiert das Mittel zur Erkennung der Schaltschwelle an das Mittel zum Erzeugen des Zündimpulses, dass durch den Zündimpuls das Mittel zum Herstellen des Hilfskurzschlusses gezündet werden soll.

Grundsätzlich können die Mittel zum Herstellen des Hilfskurzschlusses, für die Erkennung des Kurzschlusses und/oder zum Erzeugen eines Zündimpulses beliebig ausgestaltet sein. Gemäß einer Weiterbildung der Erfindung ist jedoch besonders bevorzugt, dass das Mittel zum Herstellen des Hilfskurzschlusses einen Zündeingang, ein Einkoppelelement und eine zündbare Lichtbogenstrecke aufweist, wobei der Zündeingang, das Einkoppelelement und die Lichtbogenstrecke derart ausgestaltet sind, dass eine an den Zündeingang anlegbare Zündspannung als Zündimpuls über das Einkoppelelement auf die Lichtbogenstrecke zur Zündung eines Lichtbogens einwirkt und vorzugsweise die Lichtbogenstrecke derart ausgestaltet ist, dass durch den Lichtbogen der Hilfskurzschluss zwischen wenigstens zwei Phasen des Drehstromnetzes herstellbar ist. Vorzugsweise ist dabei die den Zündimpuls auslösende Zündspannung eine Spannungstransiente, die zum Herstellen des Hilfskurzschlusses an den Zündeingang angelegt wird, wobei das Einkoppelelement und die Lichtbogenstrecke vorzugsweise derart bemessen sind, dass bereits bei verhältnismäßig kleinen Spannungen ein Lichtbogen entsteht, der zum Kurzschließen des Drehstromnetzes führt. Durch den Lichtbogen kommutiert der Kurzschlussstrom des Hauptstrompfades auf den entstehenden Lichtbogen, und verläuft nicht mehr in der Drehstromlast. Durch die Kommutierung wird also für den Kurzschlussstrom ein Bypass geschaffen, so dass eine an die Vorrichtung angeschlossene Drehstromlast nicht mehr durch den Kurzschlussstrom beschädigt werden kann. Da ein derartiger Lichtbogen im Prinzip beliebig hoch mit einem Kurzschlussstrom belastbar ist, der Kurzschlussstrom jedoch zu erheblichen Verlustleistungen in der Lichtbogenstrecke führt, ist vorzugsweise eine der Vorrichtung vorgelagerte Kurzschlussschutzeinrichtung vorgesehen, die im Falle eines Lichtbogens die Verbindung zwischen der Vorrichtung und dem Drehstromnetz unterbricht.

In diesem Zusammenhang ist weiterhin bevorzugt, dass jede Phase des Drehstromnetzes jeweils zwei Einkoppelelemente und eine Lichtbogenstrecke aufweist, für jede Phase jeweils ein erstes Einkoppelelement zwischen der jeweiligen Phase und dem Zündeingang derart geschaltet ist, dass alle ersten Einkoppelelemente an dem Zündeingang derart sternförmig zusammengeschaltet sind, für jede Phase jeweils ein zweites Einkoppelelement zwischen einen der jeweiligen Phase zugeordneten Eingang zur Zündung der jeweiligen Lichtbogenstrecke und dem Zündeingang derart geschaltet ist, dass alle zweiten Einkoppelelemente an dem Zündeingang derart sternförmig zusammengeschaltet sind und die jeweiligen Lichtbogenstrecken zwischen der jeweiligen Phase und einer jeweils anderen Phase oder einer Erdung geschaltet sind, so dass eine an den Zündeingang angelegte Zündspannung zwischen den sternförmig zusammengeschalteten ersten Einkoppelelementen und den sternförmig zusammengeschalteten zweiten Einkoppelelementen abfällt.

Gemäß einer bevorzugten Weiterbildung der Erfindung ist weiter vorgesehen, dass das Mittel zum Erzeugen des Zündimpulses eine Spule aufweist, wobei die Spule mit einer Energiequelle derart schaltbar verbunden ist, dass der Zündimpuls durch Unterbrechung der Beaufschlagung der Spule mit Energie erzeugbar ist. Demnach ist also bevorzugt, dass die in der Spule induzierte Spannung als Zündenergie zur Zündung des Mittels zum Herstellen des Hilfskurzschlusses genutzt wird. Dabei ist vorzugsweise die Energiequelle als Hilfsspannungsquelle ausgeführt, die ein Strom durch die Spule treibt, wobei dazu im Strompfad der Spule ein Widerstand vorgesehen sein kann. Die Unterbrechung dieses Stromes kann beispielsweise mittels eines Transistors erreicht werden. Dabei ist weiterhin bevorzugt, dass die in der Spule gespeicherte Energie als Zündimpuls an den Zündeingang geführt wird. Nach einer alternativen Ausgestaltung ist bevorzugt, dass das Mittel zum Erzeugen des Schaltimpulses derart ausgestaltet ist, dass der Zündimpuls durch einen durch das Mittel für die Erkennung des Kurzschlusses festgestellten Kurzschlussstrom erzeugbar ist. Demnach ist also bevorzugt, dass die Zündenergie für die Generierung des Zündimpulses aus dem Kurzschlussstrom bezogen wird, somit also der Kurzschlussstrom die Hilfsspannungsquelle ersetzen kann. In einer weiteren Ausgestaltung kann eine Transformatorenschaltung vorgesehen sein, durch die der Zündimpuls erzeugbar ist. Ebenfalls ist es möglich, eine auf einen hohen Spannungswert vorgeladene Kapazität vorzusehen, so dass die kapazitiv gespeicherte Energie als Zündenergie genutzt werden kann.

Die Aufgabe der Erfindung wird weiterhin gelöst durch eine Halbleiterschaltgeräteschutzvorrichtung, aufweisend eine vorab beschriebene Vorrichtung sowie eine Halbleiterschalteinrichtung, wobei die Halbleiterschalteinrichtung an dem Ausgang der Vorrichtung vorgesehen ist und zur Verbindung mit der Drehstromlast eingerichtet ist. Durch eine derartige Ausgestaltung wird es möglich, dass im Kurzschlussfall der Kurzschlussstrom nicht die Halbleiterschalteinrichtung zerstört, sondern der Kurzschlussstrom durch den durch die Vorrichtung geschaffenen Hilfskurzschluss fließt und somit eine vorzugsweise der Vorrichtung vorgeschaltete Kurzschlussschutzeinrichtung auslöst, so dass die Vorrichtung nicht mehr mit der Drehstromquelle verbunden ist. Durch eine derartige Lösung wird gegenüber dem Stand der Technik ein wesentlicher Fortschritt erreicht, da die Halbleiterschalteinrichtung im Kurzschlussfall nicht mehr durch den Kurzschlussstrom zerstört wird.

Weitere Ausgestaltungen und Vorteile der erfindungsgemäßen Halbleiterschaltgeräteschutzvorrichtung ergeben sich dem Fachmann in Analogie zu vorgenannten Ausführungen der Vorrichtung.

Die Aufgabe der Erfindung wird ferner gelöst durch ein Verfahren zur Verbesserung des Kurzschlussschutzes einer Drehstromlast in einem Drehstromsystem, umfassend die Schritte a) Erkennen eines Kurzschlusses an der Drehstromlast, wobei das Erkennen eines Kurzschlusses das Erkennen einer Schaltschwelle im Strompfad einer Phase des Drehstromnetzes umfasst, wobei beim Überschreiten einer vordefinierten Schaltschwelle das Erkennen eines Kurzschlusses an das Mittel zum Erzeugen des Zündimpulses signalisiert wird, wobei das Erkennen der Schaltschwelle eine galvanische Trennung umfasst, b) Erzeugen eines Zündimpulses bei Erkennung des Kurzschlusses, und c) Erzeugen eines Hilfskurzschlusses in dem Drehstromsystem durch ein durch den Zündimpuls zündbares Mittel.

Weitere Ausgestaltungen und Vorteile des erfindungsgemäßen Verfahrens ergeben sich dem Fachmann in Analogie zu vorgenannten Ausführungen der Vorrichtung.

Nachfolgend wird die Erfindung unter Bezugnahme auf die anlegende Zeichnung anhand bevorzugter Ausführungsformen näher erläutert.

Es zeigen:
Fig. 1 eine erfindungsgemäße Vorrichtung in einer schematischen Ansicht,
Fig. 2 ein erfindungsgemäßes Mittel zum Herstellen eines Hilfskurzschlusses in einer schematischen Ansicht,
Fig. 3 eine erfindungsgemäßes Mittel zum Erzeugen eines Zündimpulses in einer schematischen Ansicht, und
Fig. 4 ein erfindungsgemäßes Mittel zum Erkennen eines Kurzschlusses in einer schematischen Ansicht.

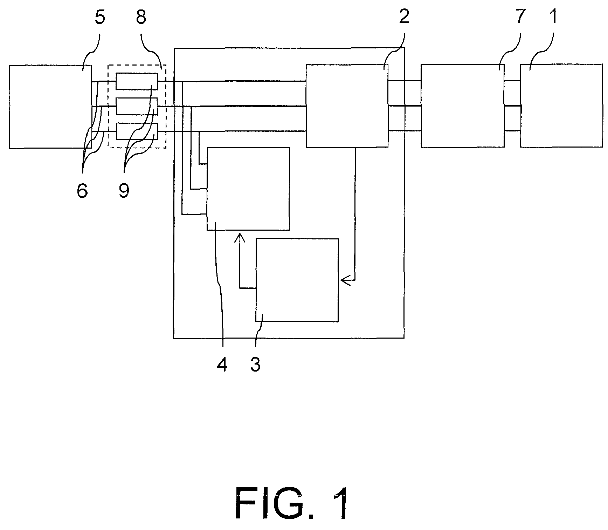

Fig. 1 zeigt eine beispielhafte Anwendung einer erfindungsgemäßen Vorrichtung für den Kurzschlussschutz einer Drehstromlast 1 in einer schematischen Ansicht.

Die Vorrichtung weist ein Mittel zum Erkennen eines Kurzschlusses 2 an der Drehstromlast 1, ein Mittel zum Erzeugen eines Zündimpulses 3 bei Erkennen des Kurzschlusses, sowie ein Mittel zum Herstellen eines Hilfskurzschlusses 4 auf. Die Vorrichtung 2, 3, 4 ist an ein Drehstromnetz 5 angeschlossen. Wenn das Mittel zum Erkennen des Kurzschlusses 2 einen Kurzschluss an der Drehstromlast 1 detektiert, signalisiert das Mittel 2 den detektierten Kurzschluss an das Mittel zum Erzeugen eines Zündimpulses 3. Das Mittel zum Erzeugen eines Zündimpulses 3 erzeugt den Zündimpuls, durch den das Mittel zum Herstellen des Hilfskurzschlusses 4 zündet und in dem Drehstromnetz 5 einen Hilfskurzschluss bewirkt.

Vor der Drehstromlast 1 ist ein Schaltgerät 7, beispielsweise ein Frequenzumrichter, ein Schütz oder ein Halbleitermotorschaltgerät, vorgesehen, welches somit zwischen dem Mittel zum Erkennen des Kurzschlusses 2 und der Drehstromlast 1, beispielsweise einem Motor, angeordnet ist. Zwischen dem Drehstromnetz 5 und der Vorrichtung 2, 3, 4 ist eine Kurzschlussstromeinrichtung 8 vorgesehen ist, welche in jeder Phase 6 des Drehstromnetzes 5 eine Sicherung 9 oder einen Leistungsschutzschalter aufweist.

Erfindungsgemäß ist nunmehr vorgesehen, dass im Falle eines Kurz- und/oder Erdschlusses hinter der Vorrichtung 2, 3, 4 also beispielsweise in dem Schaltgerät 7 oder in der Drehstromlast 1, durch die Vorrichtung 2, 3, 4 ein Hilfskurzschluss als "Bypass" geschaffen wird, so dass der Kurzschlussstrom nicht mehr durch das Schaltgerät 7 und/oder durch die Drehstromlast 1 fließt, sondern aufgrund des Hilfskurzschlusses zwischen wenigstens zwei Phasen 6 fließt, so dass die Kurzschlussschutzeinrichtung 8 die Verbindung zwischen dem Drehstromnetz 5, also der Energieversorgung, und der Vorrichtung 2, 3, 5, und damit für das Schaltgerät 7 und die Drehstromlast 1, unterbricht.

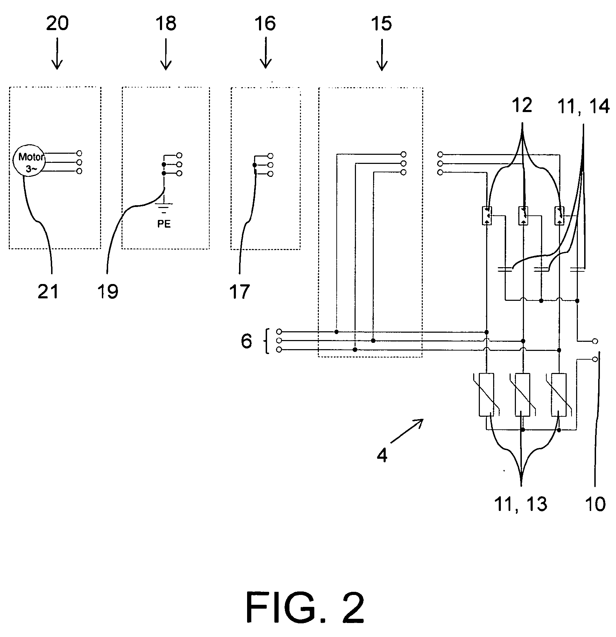

Fig. 2 zeigt eine beispielshafte Ausgestaltung des Mittels zum Herstellen des Hilfskurzschlusses 4. Das Mittel 4 weist einen Zündeingang 10 auf, wobei durch Anlegen einer Zündspannung an den Zündeingang 10 die Zündung des Mittels 4 erfolgt, so dass das Mittel 4 den Hilfskurzschluss in dem Drehstromnetz 5 bewirkt. Dazu weist das Mittel 4 ferner ein Einkoppelelement 11 auf, welches vorliegend als Varistor und Kondensator ausgeführt ist. Weiter ist eine Lichtbogenstrecke 12 vorgesehen, die als Überspannungsschutzableiter oder Luftfunkenstrecke ausgeführt sein kann.

Wie aus Fig. 2 ferner ersichtlich, sind pro Phase 6 des Drehstromnetzes 5 jeweils 2 Einkoppelelemente 11 und eine Lichtbogenstrecke 12 vorgesehen, wobei die jeweils ersten Einkoppelelemente 11, 13 und die zweiten Einkoppelelemente 11, 14 sternförmig zusammengeschaltet sind, dass an den Zündeingang 10 eine Zündspannung zwischen den derart sternförmig zusammengeschalten ersten Koppelelementen 11, 13 und den derartig sternförmig zusammengeschalteten zweiten Einkoppelelementen 11, 14 anlegbar ist. Die zweiten Einkoppelelementen 11, 14 sind ferner, wie aus Fig. 2 ersichtlich, jeweils pro Phase 6 mit der Lichtbogenstrecke 12 derart verbunden, das durch Anlegen der Zündspannung an den Zündeingang 10 die Lichtbogenstrecke 12 zum Erzeugen eines Lichtbogens zündet.

Durch den Lichtbogen werden in einer ersten Ausgestaltung 15, angedeutet durch Bezugszeichen, ein Hilfskurzschluss zwischen den Phasen 6 erzeugt. In einer zweiten Ausgestaltung 16, angedeutet durch Bezugszeichen 16, kann der Hilfskurzschluss auf einen Sternpunkt 17 verlagert werden oder in einer dritten Ausgestaltung 18, wie mit Bezugszeichen 18 angedeutet, auf einen geerdeten Sternpunkt 19 verlagert werden. In einer vierten Ausgestaltung 20 ist möglich, dass der Hilfskurzschluss, wie mit Bezugszeichen 20 angedeutet, auf einen Motor 21 verlagert wird. Dabei sind die gestrichelten Kästen 15, 16, 18, 20, die der jeweiligen Ausgestaltung 15, 16, 18, 20 zugeordnet sind, jeweils über die Phasen L1, L2, L3 mit dem Mittel 4 verbunden. In jeder Ausgestaltung 15, 16, 18, 29 bewirkt das Anlegen der Zündspannung an den Zündeingang 10, beispielsweise das Anlegen einer Spannungstransiente, die Einkopplung der Zündspannung über die Einkoppelelemente 11, 13, 14 auf die zündbare Lichtbogenstrecke 12, die dann durch Zündung des Lichtbogens den Hilfskurzschluss zwischen den Phasen 6 bzw. wenigstens zwei Phasen 6 erzeugt. Somit kommutiert in einem derartigen Kurzschlussfall der Kurzschlussstrom des eigentlich in die Drehstromlast 1 führenden Hauptstrompfades auf den entstehenden Lichtbogen der Lichtbogenstrecke 12, so dass durch den so geschaffenen "Bypass" der Kurzschlussstrom das nachfolgende Schaltgerät 7 und die Drehstromlast 1 nicht mehr belastet und somit das Schaltgerät 7 und die Drehstromlast 1 keinen Schaden nehmen können.

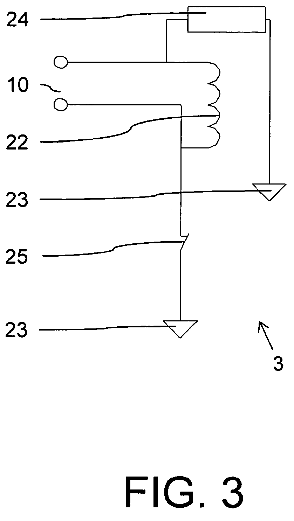

Fig. 3 stellt das Mittel zum Erzeugen des Zündimpulses 3 in einer beispielshaften Ausgestaltung dar. Vorgesehen ist eine Spule 22 in die eine Spannung über eine Hilfsspannungsquelle 23 induziert wird. Bedingt durch den Widerstand 24 wird somit ein Strom durch die Spule 22 getrieben. Durch eine Unterbrechung des Stromes, vorliegend durch einen steuerbaren Halbleiterschalter 25, wie einen Transistor, kann die in die Spule 22 indizierte Spannung als Zündenergie zum Zünden des Mittels zum Herstellen des Hilfskurzschlusses 4 über den Zündeingang 10 auf das Mittel zum Herstellen des Hilfskurzschlusses 4 beaufschlagt werden.

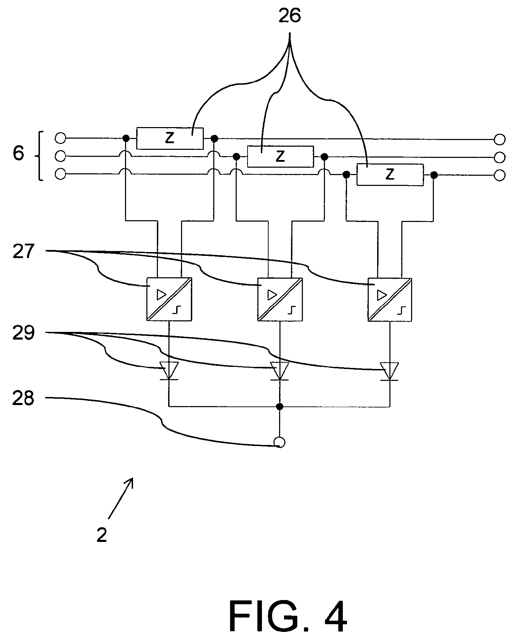

Fig. 4 zeigt eine beispielhafte Ausgestaltung des Mittels zum Erkennen des Kurzschlusses 2 an der Drehstromlast 1. Das Mittel 2 weist einen Stromsensor 26 auf, welcher beispielsweise als Shuntwiderstand, als PTC, als Hallsensor oder als Rogowskispule ausgeführt ist, und im Strompfad einer Phase 6 vorgesehen ist. Ferner weist das Mittel 2 ein Mittel zur Erkennung einer Schaltschwelle 27 auf, welche bei Überschreiten einer vordefinierten Schaltschwelle, beispielsweise des zehn- bis zwanzigfachen Nennstroms der Drehstromlast 1, einen Kurzschluss erkennt und den erkannten Kurzschluss an das Mittel zum Erzeugen des Zündimpulses 3 signalisiert, angedeutet durch Bezugszeichen 28. Wie ferner aus Fig. 4 ersichtlich, weist jede Phase 6 einen Stromsensor 26 und eine zugeordnetes Mittel zum Erkennen der Schaltschwelle 27 auf, wobei die drei Mittel 27 über eine Oder-Verknüpfung 29, vorliegend ausgeführt über Dioden, dass Überschreiten der Schaltschwelle bereits dann an das Mittel zum Erzeugen des Zündimpulses 3 signalisieren, wenn auch nur an einer Phase 6 ein Kurzschlussstrom erkannt wird.

**Bezugszeichenliste**

| | |
|---|---|
| Drehstromlast | 1 |
| Mittel zum Erkennen eines Kurzschlusses | 2 |
| Mittel zum Erzeugen eines Zündimpulses | 3 |
| Mittel zum Herstellen eines Hilfskurzschlusses | 4 |
| Drehstromnetz | 5 |
| Phase | 6 |
| Schaltgerät | 7 |
| Kurzschlussschutzeinrichtung | 8 |
| Sicherung | 9 |
| Zündeingang | 10 |
| Einkoppelelement | 11 |
| Lichtbogenstrecke | 12 |
| Erstes Einkoppelelement | 13 |
| Zweites Einkoppelelement | 14 |
| Erste Ausgestaltung | 15 |
| Zweite Ausgestaltung | 16 |
| Sternpunkt | 17 |
| Dritte Ausgestaltung | 18 |
| Geerdeter Sternpunkt | 19 |
| Vierte Ausgestaltung | 20 |
| Motor | 21 |
| Spule | 22 |
| Hilfsspannungsquelle | 23 |
| | |
| Widerstand | 24 |
| | |
| Halbleiterschalter | 25 |
| Stromsensor | 26 |
| Mittel zum Erkennen einer Schaltschwelle | 27 |
| Signalisierung | 28 |
| Oder-Verknüpfung | 29 |

## Patentansprüche

1. Vorrichtung für den Kurzschlussschutz einer Drehstromlast (1) in einem Drehstromsystem, umfassend
einen Eingang zum Anschließen der Vorrichtung (2, 3, 4) an ein Drehstromnetz (5),
einen Ausgang zum Anschließen der Drehstromlast (1) an die Vorrichtung (2, 3, 4),
ein Mittel zum Herstellen eines Hilfskurzschlusses (4) in dem Drehstromnetz (5) durch Zündung des Mittels (4),
ein Mittel zum Erkennen eines Kurzschlusses (2) an der Drehstromlast (1), und
ein Mittel zum Erzeugen eines Zündimpulses (3) bei Erkennen des Kurzschlusses, wobei
das Mittel zum Herstellen des Hilfskurzschlusses (4) und das Mittel zum Erkennen des Kurzschlusses (2) im Strompfad zwischen dem Eingang und dem Ausgang vorgesehen sind,
das Mittel zum Herstellen des Hilfskurzschlusses (4) durch den Zündimpuls zündbar ist,
das Mittel zum Erkennen des Kurzschlusses (2) einen Stromsensor (26) und ein Mittel zum Erkennen einer Schaltschwelle (27) aufweist,
der Stromsensor (26) im Strompfad einer Phase (6) des Drehstromnetzes (5) angeordnet ist,
das Mittel zum Erkennen der Schaltschwelle (27) mit dem Stromsensor (26) zusammenwirkt,
das Mittel zum Erkennen der Schaltschwelle (27) derart ausgestaltet ist, dass bei Überschreiten einer vordefinierten Schaltschwelle das Erkennen eines Kurzschlusses an das Mittel zum Erzeugen des Zündimpulses (3) signalisiert wird, und
das Mittel zum Erkennen der Schaltschwelle (27) eine galvanische Trenneinrichtung aufweist.

2. Vorrichtung nach Anspruch 1, wobei das Mittel zum Herstellen des Hilfskurzschlusses (4) einen Zündeingang (10), ein Einkoppelelement (11, 13, 14) und eine zündbare Lichtbogenstrecke (12) aufweist, wobei der Zündeingang (10), das Einkoppelelement (11, 13, 14) und die Lichtbogenstrecke (12) derart ausgestaltet sind, dass eine an den Zündeingang (10) anlegbare Zündspannung als Zündimpuls über das Einkoppelelement (11, 13, 14) auf die Lichtbogenstrecke (12) zur Zündung eines Lichtbogens einwirkt und die Lichtbogenstrecke (12) derart ausgestaltet ist, dass durch den Lichtbogen der Hilfskurzschluss zwischen wenigstens zwei Phasen (6) des Drehstromnetzes (5) herstellbar ist.

3. Vorrichtung nach Anspruch 2, wobei das Einkoppelelement (11, 13, 14) als Varistor und/oder als Kondensator ausgeführt ist und die Lichtbogenstrecke (12) als Überspannungsschutzableiter und/oder als Funkenstrecke ausgeführt ist.

4. Vorrichtung nach Anspruch 3, wobei jede Phase (6) des Drehstromnetzes (5) jeweils zwei Einkoppelelemente (11, 13, 14) und eine Lichtbogenstrecke (12) vorgesehen sind, jede Phase (6) jeweils ein erstes Einkoppelelement (11, 13, 14) zwischen der jeweiligen Phase (6) und dem Zündeingang (10) derart geschaltet ist, dass alle ersten Einkoppelelemente (11, 13) an dem Zündeingang (10) derart sternförmig zusammengeschaltet sind, jede Phase (6) jeweils ein zweites Einkoppelelement (11, 14) zwischen einem der jeweiligen Phase (6) zugeordneten Eingang zur Zündung der jeweiligen Lichtbogenstrecke (12) und dem Zündeingang (10) derart geschaltet ist, dass alle zweiten Einkoppelelemente (11, 14) an dem Zündeingang (10) derart sternförmig zusammengeschaltet sind und die jeweiligen Lichtbogenstrecken (12) zwischen der jeweiligen Phase (6) und einer jeweils anderen Phase (6) oder einer Erdung geschaltet sind, so dass eine an den Zündeingang (10) angelegte Zündspannung zwischen den sternförmig zusammengeschalteten ersten Einkoppelelementen (11, 13) und den sternförmig zusammengeschalteten zweiten Einkoppelelementen (11, 14) abfällt.

5. Vorrichtung nach einem der vorhergehenden Ansprüche, wobei jede Phase (6) des Drehstromnetzes (5) einen jeweiligen Stromsensor (26) und ein jeweiliges Mittel zum Erkennen einer Schaltschwelle (27) aufweist und alle Mittel zum Erkennen der jeweiligen Schaltschwellen (27) ausgangsseitig über eine Oder-Verknüpfung (29) derart zusammengeschaltet sind, dass bei Überschreiten der Schaltschwelle an bereits einer Phase (6) das Erkennen eines Kurzschlusses an das Mittel zum Erzeugen des Zündimpulses (3) signalisiert wird.

6. Vorrichtung nach einem der vorhergehenden Ansprüche, wobei das Mittel zum Erzeugen des Zündimpulses (3) eine Spule (22) aufweist, wobei die Spule (22) mit einer Energiequelle derart schaltbar verbunden ist, dass der Zündimpuls durch Unterbrechung der Beaufschlagung der Spule (22) mit Energie erzeugbar ist.

7. Vorrichtung nach einem der Ansprüche 1 bis 5, wobei
das Mittel zum Erzeugen des Zündimpulses (3) derart ausgestaltet ist, dass der Zündimpuls durch einen durch das Mittel zum Erkennen des Kurzschlusses (2) festgestellten Kurzschlussstrom erzeugbar ist.

8. Halbleiterschaltgeräteschutzvorrichtung, mit einer Vorrichtung (2, 3, 4) nach einem der vorhergehenden Ansprüche und einer Halbleiterschalteinrichtung, wobei die Halbleiterschalteinrichtung an dem Ausgang der Vorrichtung (2, 3, 4) vorgesehen ist und zur Verbindung mit der Drehstromlast (1) eingerichtet ist.

9. Verfahren zur Verbesserung des Kurzschlussschutzes einer Drehstromlast (1) in einem Drehstromsystem, umfassend die Schritte:
a) Erkennen eines Kurzschlusses an der Drehstromlast (1), wobei das Erkennen eines Kurzschlusses das Erkennen einer Schaltschwelle (27) im Strompfad einer Phase (6) des Drehstromnetzes (5) umfasst, wobei beim Überschreiten einer vordefinierten Schaltschwelle das Erkennen eines Kurzschlusses an das Mittel zum Erzeugen des Zündimpulses (3) signalisiert wird, wobei das Erkennen der Schaltschwelle (27) eine galvanische Trennung umfasst,
b) Erzeugen eines Zündimpulses bei Erkennen des Kurzschlusses, und
c) Erzeugen eines Hilfskurzschlusses in dem Drehstromsystem durch ein durch den Zündimpuls zündbares Mittel (4).

## Claims

1. An apparatus for the short-circuit protection of a three-phase load (1) in a three-phase system, said apparatus comprising
an input for connection of the apparatus (2, 3, 4) to a three-phase network (5),
an output for connection of the three-phase load (1) to the apparatus (2, 3, 4),
a means for producing an auxiliary short circuit (4) in the three-phase network (5) by ignition of the means (4),
a means for identifying a short circuit (2) at the three-phase load (1), and
a means for generating an ignition pulse (3) upon identification of the short circuit, wherein
the means for producing the auxiliary short circuit (4) and the means for identifying the short circuit (2) are provided in the current path between the input and the output,
the means for producing the auxiliary short circuit (4) is ignitable by the ignition pulse,
the means for identifying the short circuit (2) comprises a current sensor (26) and a means for identifying a switching threshold (27),
the current sensor (26) is arranged in the current path of a phase (6) of the three-phase network (5),
the means for identifying the switching threshold (27) cooperates with the current sensor (26),
the means for identifying the switching threshold (27) is formed in such a way that, if a predefined switching threshold is exceeded, the identification of a short circuit is signalled to the means for generating the ignition pulse (3), and
means for identifying the switching threshold (27) comprises a galvanic isolation device.

2. The apparatus according to Claim 1, wherein the means for producing the auxiliary short circuit (4) comprises an ignition input (10), a coupling element (11, 13, 14) and an ignitable arc gap (12), wherein the ignition input (10), the coupling element (11, 13, 14) and the arc gap (12) are formed in such a way that an ignition voltage in the form of an ignition pulse that can be applied to the ignition input (10) acts via the coupling element (11, 13, 14) on the arc gap (12) in order to ignite an arc gap, and the arc gap (12) is formed in such a way that the auxiliary short circuit can be produced by means of the arc gap between at least two phases (6) of the three-phase network (5).

3. The apparatus according to Claim 2, wherein the coupling element (11, 13, 14) is formed as a varistor and/or as a capacitor and the arc gap (12) is formed as a surge protector and/or as a spark gap.

4. The apparatus according to Claim 3, wherein each phase (6) of the three-phase network (5) is provided with two coupling elements (11, 13, 14) and one arc gap (12), a first coupling element (11, 13, 14) of each phase (6) is connected between the respective phase (6) and the ignition input (10) in such a way that all first coupling elements (11, 13) are connected together at the ignition input (10) in a star-shaped manner, a second coupling element (11, 14) of each phase (6) is connected between an input, assigned to the respective phase (6) for ignition of the respective arc gap (12), and the ignition input (10) in such a way that all second coupling elements (11, 14) are connected together at the ignition input (10) in a star-shaped manner, and the respective arc gaps (12) between the respective phase (6) and a respective other phase (6) or an earthing are connected such that an ignition voltage applied to the ignition input (10) drops between the first coupling elements (11, 13) connected together in a star-shaped manner and the second coupling elements (11, 14) connected together in a star-shaped manner.

5. The apparatus according to one of the preceding claims, wherein each phase (6) of the three-phase network (5) comprises a respective current sensor (26) and a respective means for identifying a switching threshold (27), and all means for identifying the respective switching thresholds (27) are connected together on the output side via an OR link (29) in such a way that, if the switching threshold is exceeded at just one phase (6), the identification of a short circuit is signalled to the means for generating the ignition pulse (3).

6. The apparatus according to one of the preceding claims, wherein the means for generating the ignition pulse (3) comprises a coil (22), wherein the coil (22) is connected in a switchable manner to an energy source in such a way that the ignition pulse can be generated by interrupting the application of energy to the coil (22).

7. The apparatus according to one of Claims 1 to 6, wherein the means for generating the ignition pulse (3) is formed in such a way that the ignition pulse can be generated by a short-circuit current established by the means for identifying the short circuit (2).

8. A semiconductor switchgear protection device, comprising an apparatus (2, 3, 4) according to one of the preceding claims and a semiconductor switching device, wherein the semiconductor switching device is provided at the output of the apparatus (2, 3, 4) and is designed for connection to the three-phase load (1).

9. A method for improving the short-circuit protection of a three-phase load (1) in a three-phase system, said method comprising the following steps:
a) identifying a short circuit at the three-phase load (1), wherein identifying a short circuit comprises identifying a switching threshold (27) in a current path of a phase (6), wherein, when execeding a predefined switching threshold, identifying of a short circuit is signalled to the means for generating the ignition pulse (3), wherein identifying the switching threshold (27) comprises a galvanic isolation,
b) generating an ignition pulse upon identification of the short circuit, and
c) generating an auxiliary short circuit in the three-phase system by a means (4) ignitable by the ignition pulse.

## Revendications

1. Dispositif pour la protection contre les courts-circuits d'une charge de courant triphasé (1) dans un système de courant triphasé, comprenant
une entrée pour établir le branchement du dispositif (2, 3, 4) à un réseau de courant triphasé (5),
une sortie pour établir le branchement de la charge de courant triphasé (1) au dispositif (2, 3, 4),
un moyen pour la production d'un court-circuit auxiliaire (4) dans le réseau de courant triphasé (5) par l'allumage du moyen (4),
un moyen pour la reconnaissance d'un court-circuit (2) sur la charge de courant triphasé (1), et
un moyen pour la production d'une impulsion d'allumage (3) lors de la reconnaissance du court-circuit, où
le moyen pour la production du court-circuit auxiliaire (4) et le moyen pour la reconnaissance du court-circuit 2) sont prévus sur le trajet du courant entre l'entrée et la sortie,
le moyen pour la production du court-circuit auxiliaire (4) peut être allumé par l'impulsion d'allumage,
le moyen pour la reconnaissance du court-circuit (2) présente un capteur de courant (26) et un moyen pour la reconnaissance d'un seuil de commutation (27),
le capteur de courant (26) est disposé dans le trajet du courant d'une phase (6) du réseau de courant triphasé (5),
le moyen pour la reconnaissance du seuil de commutation (27) agit conjointement avec le capteur de courant (26),
le moyen pour la reconnaissance du seuil de commutation (27) est conçu de telle sorte que, lors du dépassement d'un seuil de commutation prédéfini, la reconnaissance d'un court-circuit est signalée au moyen pour la production d'une impulsion d'allumage (3), et
le moyen pour la reconnaissance du seuil de commutation (27) présente un dispositif de séparation galvanique.

2. Dispositif selon la revendication 1, dans lequel le moyen pour la production du court-circuit auxiliaire (4) présente
une entrée d'allumage (10), un élément d'accouplement (11, 13, 14) et un trajet d'arc électrique (12), où l'entrée d'allumage (10), l'élément d'accouplement (11, 13, 14) et le trajet d'arc électrique (12) sont conçus de manière qu'une tension d'allumage pouvant être appliquée à l'entrée d'allumage (10) agit en tant qu'impulsion d'allumage sur le trajet d'arc électrique (12) par l'intermédiaire de l'élément d'accouplement (11, 13, 14) pour l'allumage d'un arc électrique et le trajet d'arc électrique (12) est conçu de manière à ce que le court-circuit auxiliaire peut être produit entre au moins deux phases (6) du réseau de courant triphasé (5) par l'arc électrique.

3. Dispositif selon la revendication 2, dans lequel l'élément d'accouplement (11, 13, 14) est conçu sous la forme d'une varistance et/ou d'un condensateur et le trajet d'arc électrique (12) est conçu sous la forme d'un parafoudre et/ou d'un éclateur.

4. Dispositif selon la revendication 3, où, pour chaque phase (6) du réseau de courant triphasé (5), chaque fois deux éléments d'accouplement (11, 13, 14) et un trajet d'arc électrique (12) sont prévus, pour chaque phase, chaque fois un premier élément d'accouplement (11, 13, 14) est branché entre la phase concernée (6) et l'entrée d'allumage (10) de telle sorte que tous les premiers éléments d'accouplement (11, 13) sont branchés ensemble sous une forme étoilée sur l'entrée d'allumage (10), pour chaque phase (6), chaque fois un deuxième élément d'accouplement (11, 14) est branché entre une entrée associée à la phase (6) concernée pour l'allumage du trajet d'arc électrique (12) correspondant et l'entrée d'allumage (10) de telles sorte que tous les deuxièmes éléments d'accouplement (11, 14) sont branchés ensemble sous une forme étoilée sur l'entrée d'allumage (10) et les trajets d'arc électrique (12) respectifs entre la phase (6) concernée et l'une des autres phases (6) respectives ou à une prise de terre, de sorte qu'une tension d'allumage appliquée à l'entrée d'allumage (10) décroit entre les premiers éléments d'accouplement (11, 13) branchés ensemble sous une forme étoilée et les deuxièmes éléments d'accouplement (11, 14) branchés ensemble sous une forme étoilée.

5. Dispositif selon l'une des revendications précédentes, où chaque phase (6) du réseau de courant triphasé (5) présente un capteur de courant (26) respectif et un moyen pour la reconnaissance d'un seuil de commutation (27) respectif et tous les moyens pour la reconnaissance du seuil de commutation (27) respectif sont branchés ensemble du côté extérieur par une disjonction logique (29) de telle sorte que, pour un dépassement du seuil de commutation déjà au niveau d'une phase (6), la reconnaissance d'un court-circuit est signalée au moyen pour la production de l'impulsion d'allumage (3).

6. Dispositif selon l'une des revendications précédentes, où le moyen pour la production de l'impulsion d'allumage (3) présente une bobine (22), où la bobine (22) est reliée en pouvant être commutée avec une source d'énergie de telle sorte que l'impulsion d'allumage peut être produite par une interruption de la sollicitation de la bobine (22) avec de l'énergie.

7. Dispositif selon l'une des revendications 1 à 5, où le moyen pour la production de l'impulsion d'allumage (3) est arrêté de telle sorte que l'impulsion d'allumage peut être produite par un courant de court-circuit constaté par le moyen pour la reconnaissance du court-circuit (2).

8. Dispositif de protection d'un appareil de commutation à semi-conducteur, avec un dispositif (2, 3, 4) selon l'une des revendications précédentes et un dispositif de commutation à semi-conducteur, où le dispositif de commutation à semi-conducteur est prévu à la sortie du dispositif (2, 3, 4) et est installé pour la liaison avec la charge de courant triphasé (1).

9. Procédé pour l'amélioration de la protection contre un court-circuit d'une charge de courant triphasé (1) dans un système de courant triphasé, comprenant les étampes :
a) de reconnaissance d'un court-circuit sur la charge de courant triphasé (1), où la reconnaissance d'un court-circuit comprend la reconnaissance d'un seuil de commutation (27) sur le trajet de courant d'une phase (6) du réseau de courant triphasé (5), où, lors du dépassement d'un seuil de commutation prédéfini, la reconnaissance d'un court-circuit est signalée au moyen pour la production de l'impulsion d'allumage (3), où la reconnaissance du seuil de commutation (27) comprend une séparation galvanique,
b) de production d'une impulsion d'allumage lors de la reconnaissance du court-circuit, et
c) de production d'un court-circuit auxiliaire dans le système de courant triphasé par un moyen (4) pouvant être allumé par l'impulsion d'allumage.
